## Europäisches Patentamt

## European Patent Office

## Office européen des brevets

(11) Publication number: **0 134 715**
**B1**

(12) **EUROPEAN PATENT SPECIFICATION**

(45) Date of publication of patent specification: **07.03.90**

(51) Int. Cl.⁵: **G 01 V 1/38**

(21) Application number: **84305721.7**

(22) Date of filing: **22.08.84**

(54) Underwater seismic testing.

(30) Priority: **22.08.83 GB 8322558**

(43) Date of publication of application:
**20.03.85 Bulletin 85/12**

(45) Publication of the grant of the patent:
**07.03.90 Bulletin 90/10**

(84) Designated Contracting States:
**DE FR IT NL SE**

(56) References cited:
**H.R. NELSON: "New technologies in exploration
geophysics", 1983, pages 102-104, Gulf
Publishing Co., Houston, US; "Processing 3d
data sets"**

**A.H. KLEYN:" Seismic Reflection Interpretation",
London/New York 1983/84, pp. 42-46**

(73) Proprietor: **Horizon Exploration Limited
Horizon House Azalea Drive
Swanley, Kent BR8 8JR (GB)**

(72) Inventor: **Newman, Paul
333 Main Road
Westerham Hill Westerham Kent (GB)**

(74) Representative: **Abrams, Michael John et al
HASELTINE LAKE & CO. Hazlitt House 28
Southampton Buildings Chancery Lane
London WC2A 1AT (GB)**

Courier Press, Leamington Spa, England.

## Description

This invention relates to underwater seismic testing.

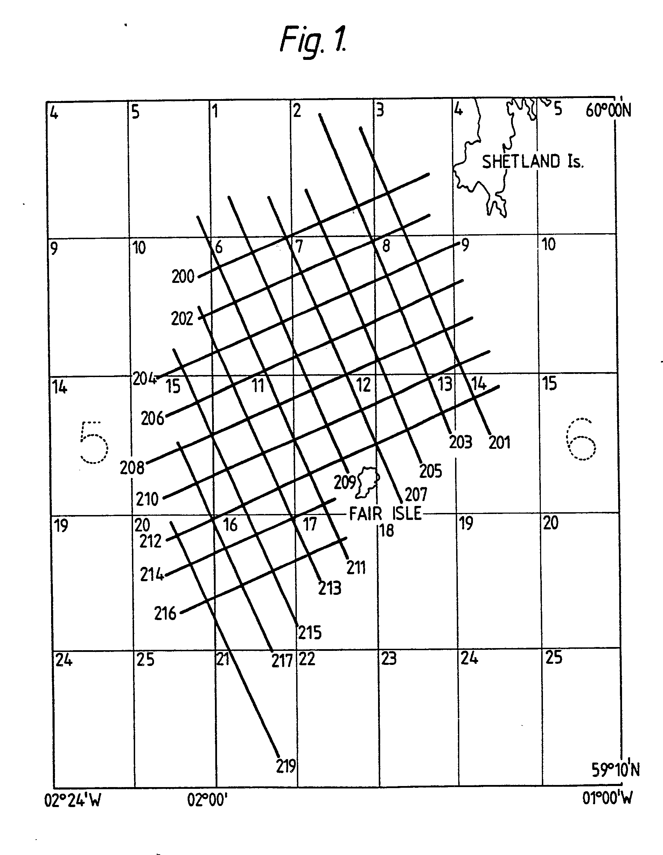

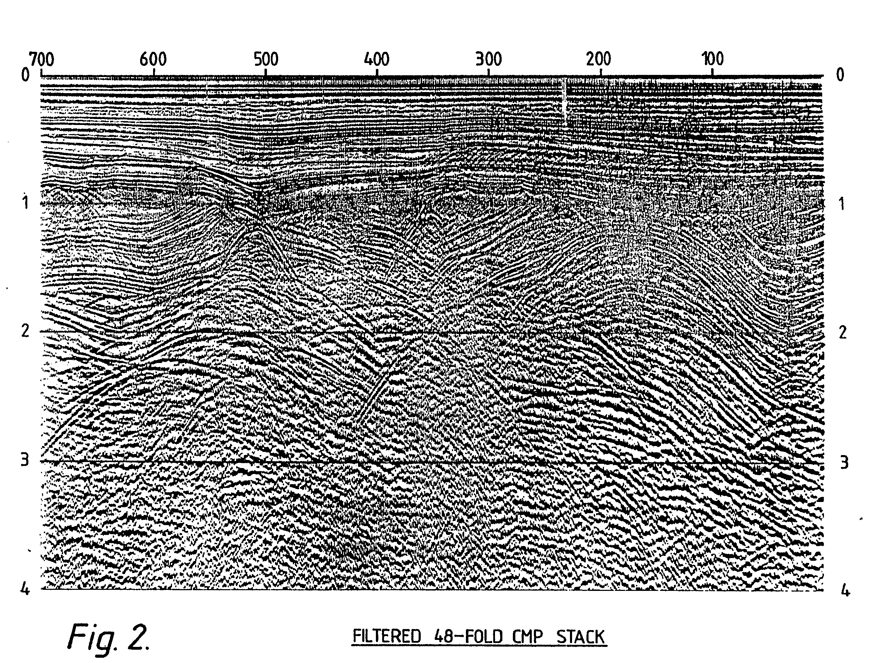

Conventional marine seismic surveys are conducted along widely spaced lines so as to cover a grid with perhaps 2 to 5 kms between profiles. Figure 1 shows a typical seismic programme map. Recorded data from each line are processed independently to yield a seismic section such as that of Figure 2, showing the reflection response of the subsurface to acoustic impulses as a function of 2-way reflection time and observation position along the line. Although having the appearance of a vertical cross section through the earth, such a simplistic view of the seismic display can be misleading where geologic structures are complicated. Reflected responses are not then registered in their correct spatial positions in the display. Gross geometrical distortion can arise due to focussing properties of reflecting surfaces and refraction effects in the overburden.

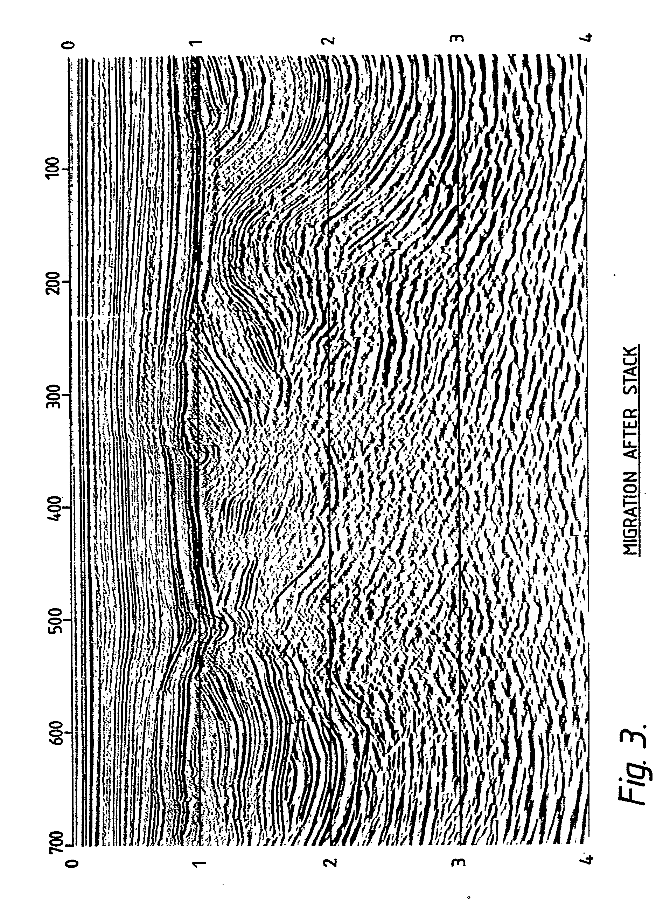

Migration is a computer processing technique that can be applied to a conventional seismic section to correct for geometrical distortion of reflected responses, but this can only be effective for responses that originate within the plane vertically beneath the surface seismic line. Figure 3 shows a migrated version of the previous Figure, which responds well to this process. To overcome the problem of out-of-plane responses, seismic observations must be obtained over a densely sampled area of the earth's surface. Areal survey methods permit 3-dimensional treatment of the seismic data when these are processed in a computer, and are thus referred to as 3-D surveys. Commonly, observations must be obtained on a grid as fine, as 25m × 25m.

3-D marine seismic surveys are presently conducted using methods that are essentially those employed for conventional 2-D profiling but with considerable extra elaboration. Seismic detectors are distributed along a marine streamer typically about 2.5 km in length. Due to effects of wind, tides and currents, the towed streamer cannot exactly follow the course of the survey vessel but adopts a 'feathering' angle. A relatively small feathering angle of 5° means that the most distant detectors are offset more than 200 m from the axis of the ship's heading, which may itself depart from the bearing of the survey line. Precise knowledge of detector positions (up to 96 groups) at the instant of every seismic shot (every 25 m, or about 10 second intervals) is essential for effective 3-D processing, and is the reason for much of the additional elaboration in recording techniques.

The use of long marine streamers confers a number of benefits upon the seismic reflection method, some of which may be deemed indispensible for conventional 2-D. profiling. By recording the responses at many independent groups of hydrophones for each seismic shot, the offset-dependence of reflection times can be observed. This is determined principally by the attitude of reflecting surfaces and by seismic wave propagation velocities. If shots are fired at distance intervals that are short in comparison with the streamer length, many responses are recorded that have different source-receiver offset distances but are centred about a common surface midpoint. By making the assumption that reflected responses relate to a point in the subsurface vertically beneath the source-receiver mid-position, reflection time as a function of source-receiver offset distance may be interpreted to yield velocity information.

Recorded responses relating to a particular common source-receiver midpoint position are generally referred to (erroneously) as Common Depth Point (CDP) traces. If time adjustments are made to recorded data so as to compensate for the additional reflection ray path lengths incurred by source-receiver separation, the redundancy of information contained within each set of CDP traces can be exploited to improve signal-to-noise conditions.

In summary, CDP traces can be analysed to provide velocity information. An average of time-corrected traces (CDP stack) enhances primary reflections whilst attenuating multiple reflections and noise. However, the assumption that common midpoint traces equate with common depth point traces is strictly valid only for reflection from plane horizontal surfaces. In conventional seismic profiling, errors that arise from this assumption are generally outweighed by advantages of CDP stack except under circumstances of severe structural complexity.

3-D surveys always address problems of structural complexity and situations where sharp spatial and temporal resolution is of paramount importance. It is then prudent to question the applicability of CDP stack methods to 3-D surveys and to look for more satisfactory operating methods.

Errors occur in the assumptions underlying the CDP technique. These concern the dispersal of sub-surface ray path reflection points in consequence of source-receiver offset and the inclination of reflecting surfaces.

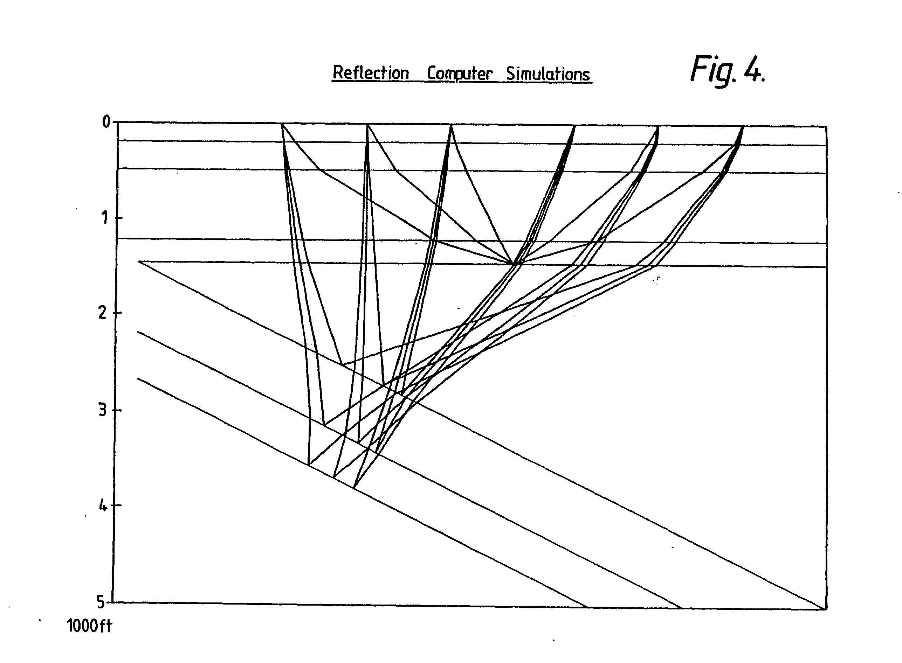

Figure 4 is a computer simulation that shows a family of CDP ray paths and clearly reveals the scatter of reflection points along dipping subsurface boundaries. If we apply time corrections to compensate ray path obliquity and then average the CDP traces we combine reflected responses from different regions of the subsurface.

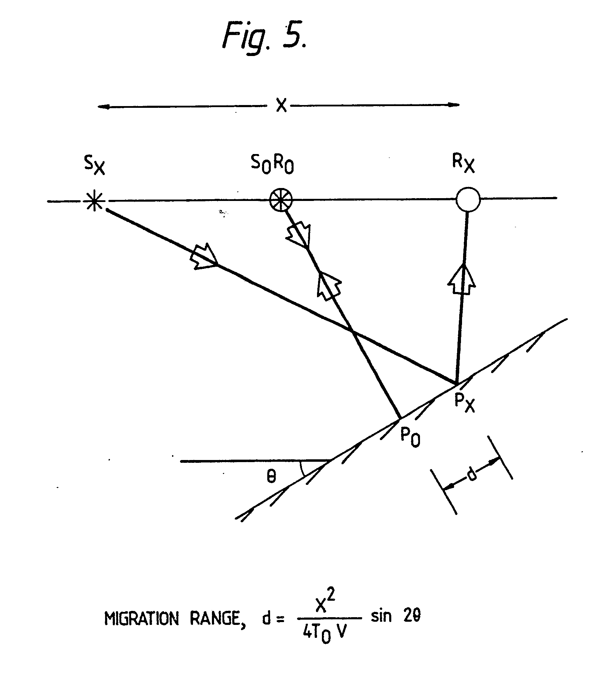

Figure 5 gives dimensional relationships for the best-case situation of constant overburden velocity and a plane reflecting surface inclined at an angle $\Theta$. Substituting typical values of, say, velocity $V = 3000$ m/sec, $X = 2500$m, normal incidence reflection time $T_0 = 2$ seconds and dip angle $\Theta = 10°$, it is seen that a range of offset distances of 2500m results in a sub-surface scatter (migration range) of 90m. Arbitrarily curved reflecting surfaces and inhomogeneity in overburden velocities can increase this range dramatically.

Against this background, current practice of resolving each receiver group position in a 3-D survey to better than 10m absolute accuracy is not logical, even if it can be reliably achieved in reality.

Although limitations of the CDP assumption are well known, universal acceptance of the method for conventional profiling has carried through to 3-D applications. The expense of a 3-D survey is such that operators dare not risk the chance of failure through use of a less orthodox approach. This makes it inevitable that any alternative approach must be directly tested against the 'standard' procedure which adopts the CDP. method.

CDP methods require long marine streamers. Detector group positioning relies upon in-streamer compasses and advanced real-time navigation computers on the seismic vessel, over and above the stringent requirements for vessel navigation. The survey method is inherently unwieldy in the presence of existing marine structures, such as drilling platforms, or in areas of high shipping activity. A distance of several kilometres surrounding the actual prospect area must be clear for manouvering so as to enter each seismic line with the streamer correctly deployed.

The data processing sequence must adhere to a pattern that is dictated by the needs for CDP stack. The entire field programme must be completed before the final CDP stack geometry can be determined. This involves the assignment of every recorded trace to an elemental area, or 'bin', containing the computed mid-point location. Once this has been established the data must be analysed to derive CDP stack corrections. Only when the CDP stack has been accomplished can consideration be given to the final major step of 3-D migration. Commonly, the lead time between completing a field survey and production of 3-D migrated displays can extend to 12 months of elapsed time.

On the credit side, the CDP recorded data provides velocity information from which migration parameters can be derived. CDP stack attenuates multiple reflections and ambient noise. These are important advantages that may not be dismissed lightly. In addition, the feathering that occurs with a long streamer can be used to advantage in providing responses along a broad strip of the survey area. This reduces the number of parallel lines that must be surveyed to effect a recording grid of, say, 25m × 25m, although this economy is at the expense of CDP stack redundancy. It is of course essential to know the exact coverage achieved at the time of the survey so as to obtain a uniform density of observations.

The migration process seeks to reconstruct, from observations made near the surface of the earth, the configuration of reflecting surfaces buried at depth. All conventional migration schemes regard the seismic observations as measurements of an emerging acoustic wavefield that could equivalently have been generated by simultaneous initiation of a distribution of point sources located on every buried reflecting surface. From estimates of seismic propagation velocities the location of these hypothetical acoustic sources, and hence of the reflecting surfaces, can then be determined by downwardly continuing the observed wavefield. Some methods accomplish this iteratively, as a layer stripping process, whereas other methods are one-step processes.

An important implication of this imaging procedure is that observed waveforms correspond to normal-incidence reflection traces, i.e. responses observed with zero separation between sources and receivers. As applied to CDP stack data this is equivalent to assuming that source-receiver offset effects are completely compensated simply by the time-correction procedures employed in performing the stack. This assumption is not valid.

Several alternative algorithms are available for migrating seismic data. All require knowledge of the sub-surface velocity field. All are based upon some version of the acoustic wave equation. Some algorithms use finite differences, or a frequency domain equivalent, in obtaining a direct solution of the second order differential equations. Other algorithms are based upon an integral formulation, which is a rigorous mathematical statement of Huygen's principle as developed by Kirchhoff.

Various commercial migration programmes differ in the approximations that reside in the algorithm used, in the fidelity of response to signal, in the response to noise, and in the computer hardware that is required for efficient implementation of the chosen algorithm. None is inherently 'correct' or entirely unambiguous in its imaging capability.

Commercial programmes presently available require that the complete seismic data set is available before imaging can commence. Ordinarily this is no disadvantage as much analysis and pre-processing must be performed in preparing a CDP stack section prior to migration.

3-D seismic methods are in an early stage of development and are seen as having evolved by simple adaptation of the accepted methods for 2-D profiling. Published results have demonstrated that enormous benefits can be derived in terms of clarification of gross geological structure.

It is nevertheless inevitable that the CDP stack technique must impose a limit upon the resolution that can be attained in 3-D imaged data over and above that which is imposed by uncertainties in positioning or by earth filtering effects. Moreover, the requirements for recording CDP data make the acquisition procedure unwieldy and expensive with a high risk of equipment malfunction in consequence of the elaborate instrumentation that is required. Long lead times to a fully processed result are unavoidable as imaging cannot commence until the entire acquisition phase and conventional CDP stack have been completed.

This invention proposes a scheme that is unique in that imaging can commence with the first seismic shot, gradually building up the sub-surface picture as the survey progresses. This approach is essential for any system that is to have a potential for real-time imaging.

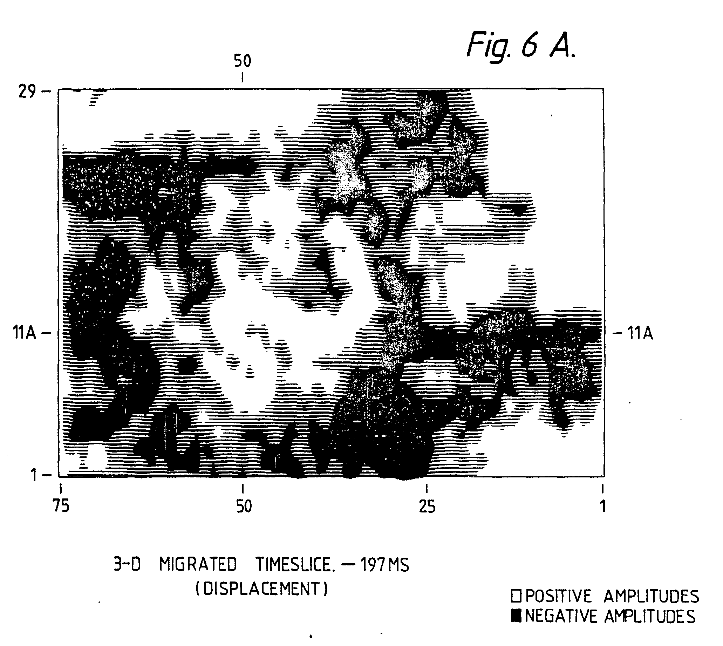

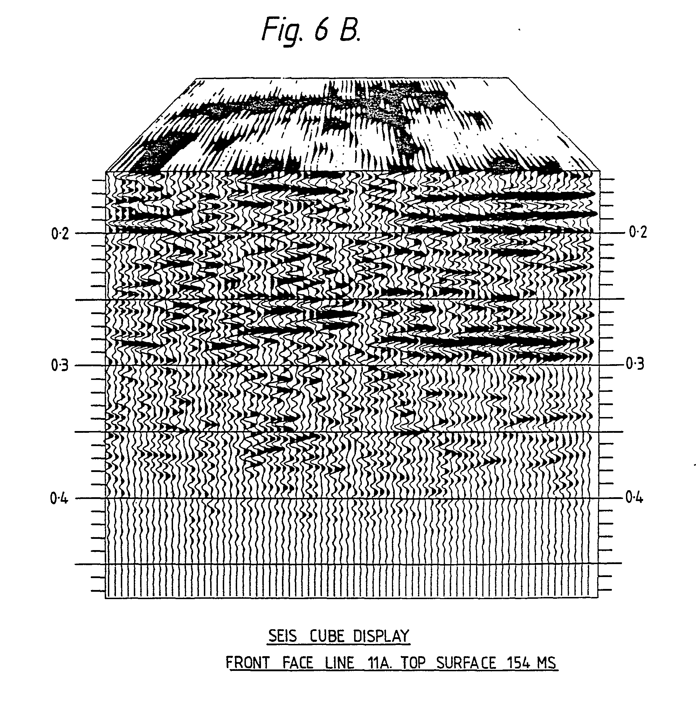

On completion of a 3-D migration process the result is a data volume that may be sectioned and displayed in various ways. Vertical sections are similar to conventional migrated 2-D profiles with the important difference that geometrical distortion should be completely corrected, and not only where this requires adjustments within the plane of the section. Alternatively the migrated data volume may be sectioned horizontally to display time slices, having the appearance of a contour map derived directly from the data. Figure 6 shows a time slice display at the top, with a composite perspective display of a partially stripped data volume at the bottom, from a 3-D survey conducted over a shallow reef structure in Gotland.

The ideal input for seismic migration programmes are normal incidence reflection traces, i.e. observations recorded with zero-offset between the seismic source and seismic detector. In practice a fixed offset of one or two hundred metres is entirely acceptable for deep reflection work and eases a number of physical and instrumental constraints relating to ambient noise levels and signal dynamic range.

Zero-offset traces are ideally suited for deconvolution processes which are designed to enhance the resolution of reflected wavelets and to attenuate short period multiple reflections. They are also the required input to seismic trace inversion schemes which derive acoustic impedance estimates directly from reflected signals.

From these fundamental considerations a greatly simplified survey technique has in accordance with this invention, been devised. The observations essential in this invention for recording 3-D data may be acquired using a single seismic source-receiver pair. More particularly. according to the present invention, there is provided a method of underwater seismic testing in which data is generated from a seismic source and a seismic receiver, and is subjected to signal processing to generate detailed sub-sea geological data, characterised in that (1) said source and said receiver are located close to one another so as to approximate zero offset conditions; (2) the data generated from said source and said receiver is single-trace data; and (3) said signal processing is carried out in two stages, the first being to effect deconvolution and the second being "3-D" imaging, in conjunction with data relating to the seismic velocity distribution in the region of interest.

Data relating to the seismic velocity distribution in the region of interest may be already known or, if it is not known, may first be determined as a primary step forming part of the method of this invention.

The latter stage of processing is preferably carried out using the Kirchhoff integral formulation.

Practical advantages are immediately apparent and far reaching. Removing the long multi-trace streamer also obviates the need for streamer position monitoring with all of its complications and susceptibilities to errors. The streamer itself is the most vulnerable single item of the entire seismic instrumentation and a major source of problems. Conventional multi-channel recording instruments also become obsolete with single trace recording.

Many more prospect areas become accessible for 3-D surveys when the conventional streamer is eliminated. Manoeuverability of the survey vessel is greatly improved. In the longer term, smaller vessels can be equipped that are capable of operating closer to shore, in confined waters, or in close proximity to drilling structures. It is not unrealistic to expect that surveying speeds may be increased by 50% with careful attention to streamer noise characteristics, whilst down-time lost in turning onto line would be virtually eliminated. Time lost in retrieving and deploying the streamer in marginal weather conditions would also be dramatically cut.

Still in the longer term, cost benefits accruing from the simplified survey technique could make it feasible to image every potential oil-bearing structure in a petroleum province such as the North Sea, with enormous reductions in exploration risks.

Advantages of single-trace recording carry through to computer processing with possibly greater impact. The volume of data acquired from each seismic shot is reduced by approximately two orders of magnitude. The 4.6 million bits commonly recorded every 10 seconds from a 96 trace streamer are reduced to a mere 48,000 bits. Such volumes can be comfortably transmitted via existing satellite links to shore-based computer centres whilst the survey is in progress.

If we can dispense with the CDP stack the computer processing requirements prior to imaging are further reduced by several orders of magnitude. Sorting the data into CDP families on an areal basis ('binning') is not required. The spatial blurring and inevitable errors associated with binning are also avoided. Time consuming analysis of data to determine CDP stack corrections is likewise avoided. Signal manipulation and pre-processing routines such as demultiplex and deconvolution before stack are eliminated (deconvolution on single-trace data equating with the customary deconvolution after stack on CDP data). These two operations together account for more than half the total computer time spent in processing conventional CDP marine data. Moreover, none of these essential tasks can commence until the survey is complete and the recorded data received at the processing centre.

A 10km × 10km 3-D survey will commonly yield some 2000 line-kilometres of conventional CDP profiles. This would normally require several months of concerted effort (a few man/years) to reduce to CDP stack form suitable for input to the machine intensive 3-D migration phase.

The signal processing envisaged in the present invention for single trace recordings is restricted to deconvolution, followed immediately by 3-D imaging. The computer time required for deconvolution is measured in tens of milliseconds per trace and can be accomplished on-line. The entire processing operation could be completed under the control of one experienced processing geophysicist, adding greatly to the integrity of the result.

Two alternative approaches to 3-D imaging are now proposed in accordance with this invention, one of these being available with present technology. Both are based upon the Kirchhoff integral formulation as this is seen to have distinct advantages in terms of signal-to-noise criteria, and this is the only route that appears to lead ultimately to a real-time imaging capability.

As applied to sampled seismic data, the Kirchhoff integral approach reduces to a summation of discrete sample values that occur over hyperboloidal surfaces within a 3-D data set. Some further computationally trivial spectral and amplitude weighting operations are also involved. By reformulating the equations appropriate samples can be added into store as new data is acquired, thus avoiding the requirement for a complete data set before imaging can commence.

A first method for reducing the 3-D imaging problem to manageable proportions accomplishes the summations in two steps, performing summations in two mutually orthogonal directions to obtain a result that is equivalent to summing over an area. The equivalence is exact for constant seismic propagation velocities, otherwise it is in error to a degree that depends upon the severity of velocity heterogeneity.

Existing computer technology is such that the first step in this approach can be accomplished, without recourse to main-frame machines, within a time scale similar to that of acquiring the data. For an areal survey of square dimensions the second stage of the two-step method would be possible within a time at worst comparable to that required to conduct the survey, i.e. a few weeks.

The ultimate aim of accomplishing a full migration in a single step and in real-time is considered entirely feasible with development of specific hardware. The arithmetic requirements are comfortably within the capabilities of current array processors. Problems to be overcome concern rapid addressing and accessing large data arrays. The solution to these problems will exploit the regular symmetry and massive redundancy inherent in the data.

An apparent weakness in the above proposals is that knowledge of the seismic velocity distribution is an essential input to the migration process, whereas this information is usually derived from studies of the CDP data that is subsequently imaged. The method of this invention is not expected to displace conventional CDP profiling for reconnaissance and semi-detailed surveys. CDP profiles will define prospective geological structures in broad outline, whilst simultaneously providing the raw material for velocity estimates needed for subsequent 3-D investigations.

In the event that velocity errors arise during the imaging process of this invention, as they inevitably do in existing schemes, residual migration is proposed for remedial purposes. This requires significantly less computational effort than a complete re-migration from scratch. Used selectively in a reiterative mode, residual migration would also serve to confirm the velocities needed for depth conversion. The aim would be to iterate the velocity parameter so as to optimise the focus at different time levels. Critical focus should be observed more clearly with the spatial resolution available from short-offset recording.

A further major role of the prior art CDP stack is to improve the signal-to-noise ratio of primary reflections with respect to ambient noise. The pressure amplitude in a seismic wave decays progressively with distance travelled, until eventually it falls beneath a level determined by ambient noise conditions. The most important single factor contributing to this decay is the spherical spreading effect. More correctly this is termed divergence loss as propagating wavefront surfaces are not in general strictly spherical.

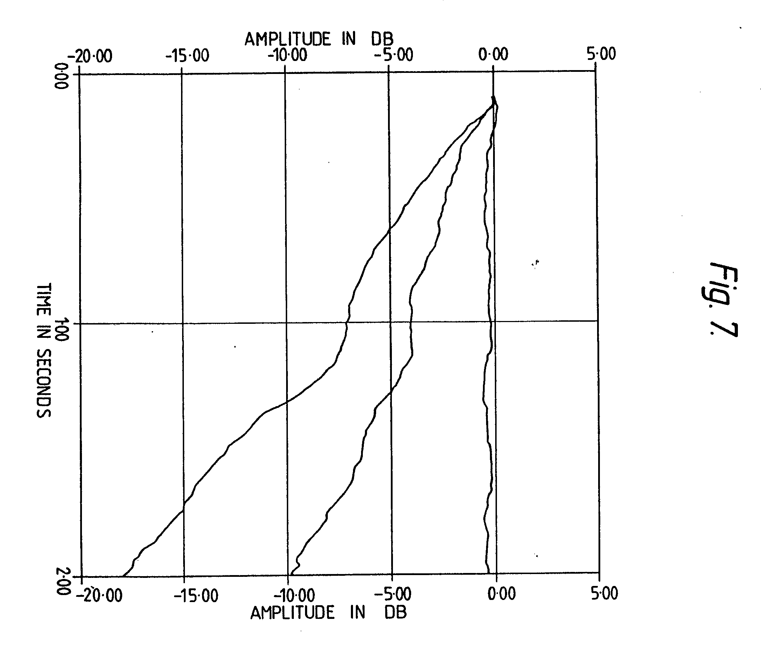

A property of Kirchhoff migration that has not hitherto been appreciated is that it incorporates an inverse for divergence loss as well as for the focussing effects and geometrical distortions that are generally the motivating reasons for applying migration. Then, to the extent that divergence loss is the principal cause of signal amplitude decay, if a short-offset recording has adequate signal-to-noise ratio at early reflection times this should be equally so at late reflection times. We have found that in practical experiments with scale model data acquired at ultrasonic frequencies in a water tank, significant benefits can be achieved. Figure 7 illustrates the results obtained from such an experiment, showing an 18dB boost in signal-to-noise ratio at 2 seconds reflection time resulting from the 3-D migration process. This degree of enhancement with respect to random noise is equivalent to the best achievable result to be expected from a 64-fold CDP stack. It follows that if a 24 or 48-fold CDP stack provides adequate signal-to noise ratios in conventional 2-D profiles, single trace recordings should be more than adequate input for 3-D imaging.

A further major benefit of the prior art CDP stack is the attenuation provided against long-period multiple reflections. There is a considerable body of theory relating to multiple elimination through wavefield extrapolation techniques. Some proposals consider this function an integral part of the migration process. In order to succeed using assumptions of linear acoustic wave theory, the ideal input data would be normal-incidence reflection traces properly compensated for divergence loss, such as would result from the 3-D recording proposal of this invention.

**Claims**

1. A method of underwater seismic testing in which data is generated from a seismic source and a seismic receiver, and is subjected to signal processing to generate detailed sub-sea geological data, characterised in that (1) said source and said receiver are located close to one another so as to approximate zero offset conditions; (2) the data generated from said source and said receiver is single-trace data; and (3) said signal processing is carried out in two stages, the first being to effect deconvolution and the second being 3-D imaging, in conjunction with data relating to the seismic velocity distribution in the region of interest.

2. A method according to claim 1, which comprises, prior to the operation of said source and said receiver, the step of determining the seismic velocity distribution in the region of interest.

3 A method according to claim 1 or 2, wherein said 3-D imaging is effected using the Kirchhoff integral formulation.

4. A method according to claim 1, 2 or 3, wherein said source and said receiver have a fixed offset of one or two hundred metres.

**Patentansprüche**

1. Verfahren zum seismischen Prüfen unter Wasser, bei dem Daten von einer seismischen Quelle und einem seismischen Empfänger erzeugt und einer Signalverarbeitung unterzogen werden, um detaillierte geologische Daten aus dem Bereich unterhalb eines Meeres zu erzeugen, dadurch gekennzeichnet, (1) daß die genannte Quelle und der genannte Empfänger derart nahe beieinander angeordnet sind, daß Null-Versetzungs-Bedingungen approximiert sind, (2) daß die von der genannten Quelle und dem genannten Empfänger erzeugten Daten Einzelspur-Daten sind und, (3) daß die genannte Signalverarbeitung in zwei Stufen durchgeführt wird, deren erste eine Rückfaltung und deren zweite eine "3-D"-Abbildung in Verbindung mit Daten bezüglich der seismischen Geschwindigkeitsverteilung in dem interessierenden Bereich bewirkt.

2. Verfahren nach Anspruch 1, wobei vor dem Betrieb der genannten Quelle und des genannten Empfängers die seismische Geschwindigkeitsverteilung in dem interessierenden Bereich bestimmt wird.

3. Verfahren nach Anspruch 1 oder 2, wobei die genannte "3-D"-Abbildung unter Verwendung des Kirchoffschen Integral-Ansatzes bewirkt wird.

4. Verfahren nach Anspruch 1, 2 oder 3, wobei die genannte Quelle und der genannte Empfänger eine festliegende Versetzung von ein- oder zweihundert Metern haben.

**Revendications**

1. Un procédé d'essai sismique sous-marin dans lequel une donnée est produite à partir d'une source sismique et d'un récepteur sismique, et est soumise à un traitement de signal pour produire des données géologiques sousmarines détaillées, caractérisé en ce que (1) ladite source et ledit récepteur sont situés l'un près de l'autre de façon à approcher des conditions de déport zéro, (2) la donnée produite à partir de ladite source et dudit récepteur est une donnée de contour unique, et (3) ledit traitement de signal est effectué en deux temps, la première consistant à effectuer un désenroulement et la seconde consistant en une production d'image "3-D" en liaison avec des données concernant la répartition de la vitesse sismique dans la région d'intérêt.

2. Un procédé selon la revendication 1, qui comprend, avant le fonctionnement de ladite source et dudit récepteur, l'opération de déterminer la répartition de la vitesse sismique dans la région d'intérêt.

3. Un procédé selon la revendication 1 ou 2, dans lequel ladite production d'image "3-D" est effectuée en utilisant la formulation intégrale de Kirchhoff.

4. Un procédé selon la revendication 1, 2 ou 3, dans lequel ladite source et ledit récepteur ont un déport fixe de cent ou deux cents mètres.

# Fig. 1.

Fig. 2.

FILTERED 48-FOLD CMP STACK

EP 0 134 715 B1

*Fig. 3.*

MIGRATION AFTER STACK

Reflection Computer Simulations

Fig. 4.

EP 0 134 715 B1

# Fig. 5.

$$\text{MIGRATION RANGE,} \quad d = \frac{x^2}{4T_0 V} \sin 2\theta$$

Fig. 6 A.

3-D MIGRATED TIMESLICE. — 197 MS
(DISPLACEMENT)

☐ POSITIVE AMPLITUDES
■ NEGATIVE AMPLITUDES

## Fig. 6 B.

SEIS CUBE DISPLAY
FRONT FACE LINE 11A. TOP SURFACE 154 MS

EP 0 134 715 B1

Fig. 7.

8